# EUROPEAN PATENT APPLICATION

(11) **EP 3 176 406 A1**
(43) Date of publication of application: **07.06.2017**
(21) Application number: 16200335.4
(22) Date of filing: 23.11.2016
(51) Int. Cl.: F02C 6/02, F02C 9/42

(54) **METHOD AND CONTROL SYSTEM FOR DETERMINING A TORQUE SPLIT FOR A MULTI-ENGINE SYSTEM**

(30) Priority: 04.12.2015 US 201514959316
(71) Applicant: General Electric Company, Schenectady, NY 12345 (US)
(72) Inventor: PAUL, Jacques, Lynn, MA 01905 (US); YARDIBI, Tarik, Lynn, MA 01905 (US)
(74) Representative: Williams, Andrew Richard

(57) **Abstract**

Systems and methods 300 for determining torque split among engines 110, 120 in a multi-engine system 100 using adaptive engine models are provided. In one embodiment, a method 300 of determining a torque split can include generating 304 a first model 515 specifying torque versus fuel flow for a first engine 110 based at least in part on measured operating points for the first engine 110; and generating 306 a second model 525 specifying torque versus fuel flow for a second engine 120 based at least in part on measured operating points for the second engine 120. The method can further include determining 308 a torque split for the first engine 110 and the second engine 120 that reduces total fuel flow for the first engine 110 and the second engine 120 based at least in part on the first model 515 and the second model 525; and controlling 310 the torque output of the first engine 110 and the second engine 120 based at least in part on the torque split.

## Description

### FIELD

The present subject matter relates generally to determining a torque split for multi-engine systems used for aviation, marine, and other applications.

### BACKGROUND

In some applications, such as multi-engine turbo-shaft applications, multiple engines can be used to provide torque to a common shaft via a gear box. The torque associated with each engine can be summed to provide a total torque at the common shaft. In some cases, each engine in the multi-engine application can provide a different torque while the summed torque of the multiple engines on the shaft is maintained at a desired total torque output.

Engine models can be used to model and determine various operating points of engines, such as torque outputs for engines. For instance, engine models can be used to model torque versus fuel flow characteristics. In some cases, engine models can also model other parameters or variables, such as positions of variable geometry of the engine (e.g., variable stator vanes, inlet guide vanes, etc.) and variable bleed valve positions. Engine models are typically defined offline based on nominal characteristics associated with engine type.

### BRIEF DESCRIPTION

Aspects and advantages of the present disclosure will be set forth in part in the following description, or may be learned from the description, or may be learned through practice of the examples disclosed herein.

One example aspect of the present disclosure is directed to a method of determining a torque split for a multi-engine system having a first engine and a second engine coupled to at least one shaft. The method includes generating, by one or more control devices, a first model specifying torque versus fuel flow for a first engine based at least in part on measured operating points for the first engine and generating, by the one or more control devices, a second model specifying torque versus fuel flow for a second engine based at least in part on measured operating points for the second engine. The method further includes determining, by the one or more control devices, a torque split for the first engine and the second engine that reduces total fuel flow for the first engine and the second engine based at least in part on the first model and the second model. The method further includes controlling, by the one or more control devices, the torque output of the first engine and the second engine based at least in part on the torque split.

Yet another example aspect of the present disclosure is directed to a control system for an aircraft having multiple engines providing torque to a shaft. The control system includes one or more processors and one or more memory devices. The control system further includes one or more first sensors configured to obtain measurements of one or more operating parameters associated with a first engine. The control system further includes one or more second sensors configured to obtain measurements of one or more operating parameters associated with a second engine. The one or more memory devices can store computer-readable instructions that when executed by the one or more processors cause the one or more processors to perform operations. The operations can include: generating a first model specifying torque versus fuel flow for a first engine based at least in part on the measurements of one or more operating parameters obtained by the one or more first sensors; generating a second model specifying torque versus fuel flow for a second engine based at least in part on the measurements of one or more operating parameters obtained by the one or more second sensors; determining a torque split for the first engine and the second engine that reduces total fuel flow for the first engine and the second engine based at least in part on the first model and the second model; and controlling the torque output of the first engine and the second engine based at least in part on the torque split.

Yet another example aspect of the present disclosure is directed to an aircraft. The aircraft includes a first engine configured to provide a first torque to at least one shaft; a second engine configured to provide a second torque to the at least one shaft. The aircraft further includes a control system programmed to perform operations. The operations can include generating a first model specifying torque versus fuel flow for a first engine based at least in part on measured operating points for the first engine; generating a second model specifying torque versus fuel flow for a second engine based at least in part on measured operating points for the second engine; determining the first torque for the first engine and the second torque for the second engine that reduces total fuel flow for the first engine and the second engine based at least in part on the first model and the second model; and controlling the torque output of the first engine and the second engine based at least in part on the first torque and the second torque.

These and other features, aspects and advantages of various examples will become better understood with reference to the following description and appended claims. The accompanying drawings, which are incorporated in and constitute a part of this specification, illustrate aspects of the present disclosure and, together with the description, serve to explain the related principles.

### BRIEF DESCRIPTION OF THE DRAWINGS

Detailed discussion of embodiments directed to one of ordinary skill in the art are set forth in the specification, which makes reference to the appended figures, in which:
FIG. 1 depicts an example multi-engine system according to example embodiments of the present disclosure;
FIG. 2 depicts an example controller according to example embodiments of the present disclosure;
FIG. 3 depicts a flow diagram of an example method according to example embodiments of the present disclosure;
FIG. 4 depicts a graphical representation of example models specifying torque versus fuel flow according to example embodiments of the present disclosure; and
FIG. 5 depicts an example control implementation according to example embodiments of the present disclosure.

### DETAILED DESCRIPTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment can be used with another embodiment to yield a still further embodiment. Thus, it is intended that the present invention covers such modifications and variations as come within the scope of the appended claims and their equivalents.

Example aspects of the present disclosure are directed to determining an enhanced or optimal torque split among engines in a multi-engine application to improve operation of the multi-engine system. For instance, a torque split can be determined among the multiple engines that reduces total fuel flow for the multi-engine system. In some embodiments, engine parameters are monitored to adapt models specifying torque versus fuel flow based on real time performance of each individual engine. The performance of each engine might be different due to manufacturing differences as well as differences in operating conditions accumulated over their usage. The adapted models can be used to determine a torque split that provides reduced total fuel flow while preserving a total torque output for the multi-engine system. In some embodiments, secondary control parameters (e.g. variable geometry positions and bleed valve positions) for the engines can be determined to reduce fuel flow for the multi-engine system.

More particularly, a multi-engine system can include a plurality of engines coupled to at least one shaft via, for instance, a gearbox. Measurements of relevant operating parameters (e.g. torque output, fuel flow, temperature, pressure, speed etc.) for each engine can be obtained via sensor measurements and used to generate individually tuned physics based or emperical models specifying torque versus fuel flow (e.g., torque versus fuel flow representations) unique to each engine. Once the individual models specifying torque versus fuel flow have been generated, a torque split algorithm can be used to determine a torque split among the plurality of engines using the individual models to reduce and/or minimize fuel flow while maintaining the total torque output of the engines constant. In some embodiments, the torque split can specify a different amount of torque to be provided by each engine.

In some embodiments, physics-based engine models (e.g., multi-parameter, non-linear engine representations) can be used to generate the torque versus fuel flow representations for the individual engines. The engine models can be tuned based on measured operating parameters using, for instance, a tracking filter. Tracking filters can be implemented as a proportional-integral-derivative controller or an extended Kalman filter. In addition, optimizations (e.g., performance seeking control processes) can be performed for each individual engine to determine secondary control parameters (e.g., variable geometry position, variable bleed valve position) for each engine so as to enhance fuel consumption patterns. Based on the determined secondary control parameters, the engine models can be used to generate torque versus fuel flow characteristics for each individual engine. The torque versus fuel flow characteristics can be provided to a torque split algorithm to determine a torque split among the plurality of engines.

In some embodiments, a global optimization can be performed based on the engine models for of the plurality of engines. In this embodiment, the engine model for each engine in the multi-engine system can be tuned based on measured operating parameters for each engine using tracking filters. A global performance seeking control process can be performed to determine an optimum or improved state for each of a plurality of variables. This method can use various non-linear constrained and iterative optimization methods. The torque split can be one of the plurality of variables and can be optimized to reduce fuel flow while maintaining a constant total torque. The global optimization can also determine various secondary operating parameters, such as variable geometry position and variable bleed valve position, for each of the plurality of engines.

In this way, example aspects of the present disclosure can have a technical effect of operating a multi-engine system according to a torque split that reduces overall fuel consumption while still meeting required torque output needs. In addition, systems and methods according to example aspects of the present disclosure can be implemented using existing control architectures for the multi-engine system.

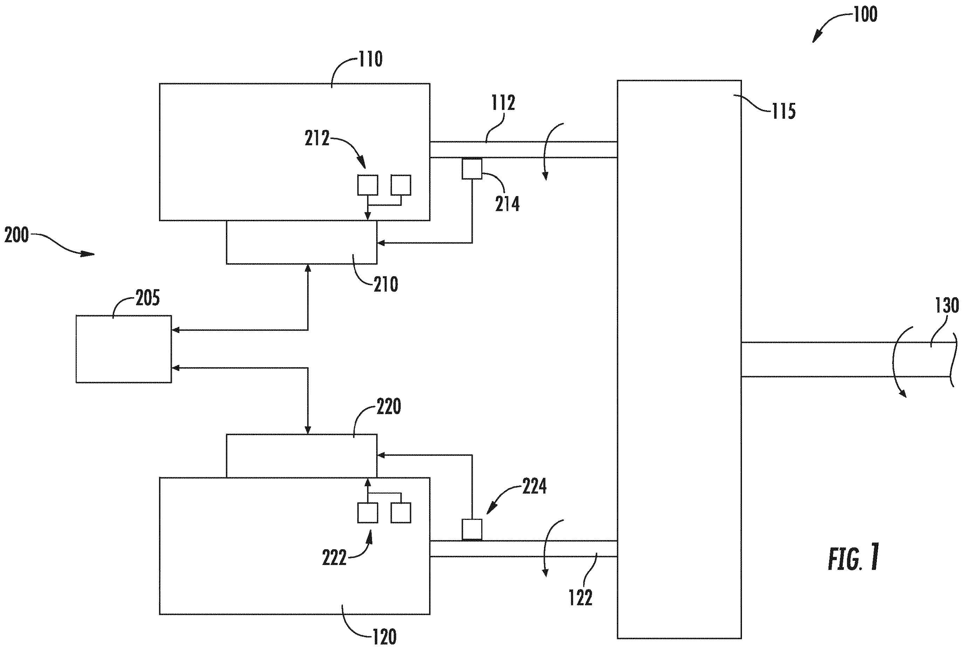

FIG. 1 depicts an example multi-engine system 100 that can form a part of, for instance, an aircraft. The multi-engine system 100 can include a first engine 110 and a second engine 120. In some embodiments, the first engine 110 and the second engine 120 can each be a gas turbine engine. A gas turbine engine can include a fan and a core arranged in flow communication with one another. The core of the gas turbine engine can include an air flow path having, in serial air flow order, a compressor section, a combustion section, a turbine section, and an exhaust section. The compressor section can include one or more compressors used to compress air. The compressed air can be provided to the combustion section where it is mixed with fuel and burned to provide combustion gases. The combustion gases can be used to support operation of the compressor section and the turbine section of the gas turbine engine via one or more turbines.

Example aspects of the present disclosure will be discussed with reference to gas turbine engines for purposes of illustration and discussion. Those of ordinary skill in the art, using the disclosures provided herein, will understand that other types of engines can be used without deviating from the scope of the present disclosure. In addition, FIG. 1 depicts a multi-engine system 100 having two engines (e.g., first engine 110 and second engine 120). The multi-engine system 100 can have more than two engines without deviating from the scope of the present disclosure.

The first engine 110 can be configured to provide a first torque to a first shaft 112. The second engine 120 can be configured to provide a second torque to a second shaft 122. The first shaft 112 and the second shaft 122 can be coupled to a common shaft 130 via a gearbox 115. In this way, the first engine 110 and the second engine 120 can provide a total torque to the shaft 130 that is the sum of the first torque provided by the first engine 110 to the first shaft 112 and the second torque provided by the second engine 120 to the second shaft 122. Losses from the gearbox can be taken into account based on significance.

According to example aspects of the present disclosure, the system 100 can further include a control system 200. The control system 200 can include one or more control devices. A control device can include any device or system configured to implement control or processing logic, such as a computing device, microcontroller, microprocessor, controller, control module, or other suitable control device. The control system 200 can be configured to determine a torque split for the first engine 110 and the second engine 120 to improve performance of the system 100 (e.g., reduce fuel flow) according to example embodiments of the present disclosure.

In the example of FIG. 1, the control system 200 can include a system level controller 205 that is in communication with an engine controller 210 associated with the first engine 110 and an engine controller 220 associated with the second engine 120. The system controller 205 can be a computing system associated with, for instance, the aircraft. For instance, the system controller 205 can be a flight control computing system, aircraft mission computing system, avionics system, or other suitable system. The first engine controller 210 can be a full authority digital engine control (FADEC) system associated with the first engine 110. The second engine controller 220 can be a FADEC control system associated with the second engine.

The control system 200 can include various sensors configured to measure operating parameters associated with the first engine 110 and the second engine 120. The sensors can include sensors already in place for other control operations or may include additional sensors installed for this purpose For instance, the control system 200 can include sensors 212 configured to measure operating parameters associated with the first engine 110, such as temperature, pressure, fuel flow, speed, etc. The control system 200 can further include a torque sensor 214 configured to measure a torque output of the first engine 110. The control system 200 can include sensors 222 configured to measure operating parameters associated with the second engine 120, such as temperature, pressure, fuel flow, speed, etc. The control system 200 can further include a torque sensor 224 configured to measure a torque output of the first engine 120.

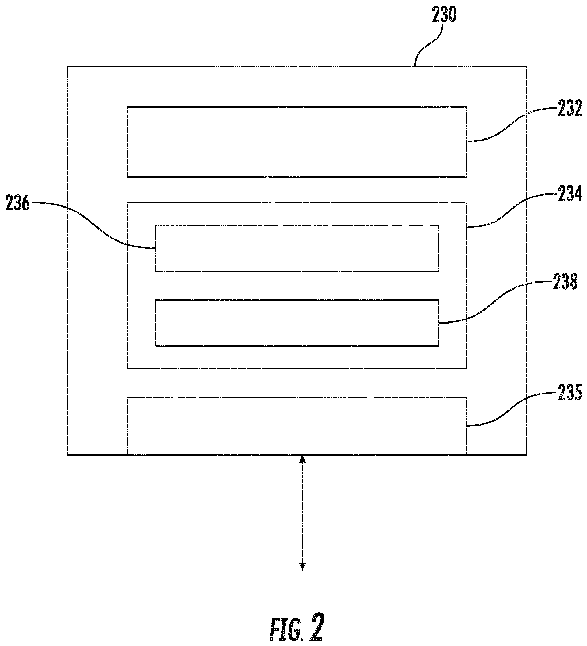

FIG. 2 depicts details concerning an example control device 230 according to example embodiments of the present disclosure. The control device 230 can be, for instance, the system controller 205, one of the engine controllers 210 or 220, or other suitable control device 200.

The control device 230 can include one or more processors 232 and one or more memory devices 234. The one or more processors 232 can include any suitable processing device, such as a microprocessor, microcontroller, integrated circuit, logic device, or other suitable processing device. The one or more memory devices 234 can include one or more computer-readable media, including, but not limited to, non-transitory computer-readable media, RAM, ROM, hard drives, flash drives, or other memory devices. In some embodiments, the one or more processors 232 and one or more memory devices 234 can be located across multiple systems, devices, or locales.

The one or more memory devices 234 can store information accessible by the one or more processors 232, including computer-readable instructions 236 that can be executed by the one or more processors 232. The instructions 236 can be any set of instructions that when executed by the one or more processors 232, cause the one or more processors 232 to perform operations. The instructions 236 can be software written in any suitable programming language or can be implemented in hardware. In some embodiments, the instructions 236 can be executed by the one or more processors 232 to cause the one or more processors to perform operations for determining a torque split for a multi-engine system, such as the multi-engine system 100 shown in FIG. 1.

The memory devices 234 can further store data 238 that can be accessed by the processors 232. The data 238 can include, for instance, models, torque versus fuel flow relationships, engine models, measured operating parameters, and other data that can be used to according to example embodiments of the present disclosure.

The control device 230 can include a communications interface 235 for communicating with one or more other control devices or with sensors configured to measure operating parameters associated with one or more engines. The communications interface 235 can include any suitable interface for communicating remote devices and can include any number of wired or wireless links and/or networks. Communication can be performed across the communication interface 235 using any suitable protocol.

The technology discussed herein makes computer-based systems and actions taken by and information sent to and from computer-based systems. One of ordinary skill in the art will recognize that the inherent flexibility of computer-based systems allows for a great variety of possible configurations, combinations, and divisions of tasks and functionality between and among components. For instance, processes discussed herein may be implemented using a single computing device or multiple computing devices working in combination. Databases, memory, instructions, and applications may be implemented on a single system or distributed across multiple systems. Distributed components may operate sequentially or in parallel.

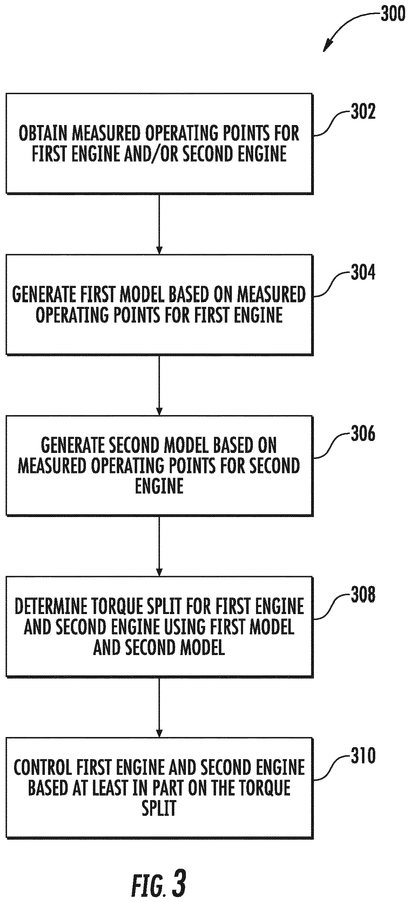

FIG. 3 depicts an example method (300) for determining a torque split for a multi-engine system according to example embodiments of the present disclosure. The method (300) can be implemented by one or more control devices, such as one or more of the control devices in the control system 200 of FIG. 1. In addition, FIG. 3 depicts steps performed in a particular order for purposes of illustration and discussion. Those of ordinary skill in the art, using the disclosures provided herein, will understand that various steps of any of the methods disclosed herein can be adapted, modified, rearranged, omitted, and/or expanded in various ways without deviating from the scope of the present disclosure.

At (302), the method includes obtaining measured operating points for a first engine and a second engine. The measured operating points can be based on measured operating parameters for each engine, such as measured fuel flow, measured temperature, measured torque, measured speed, etc. The measured operating parameters can be obtained by various sensors associated with the first engine and the second engine. The measured operating points can be combinations of the various measured operating parameters, such as measured fuel flow for various torque operating points.

In some embodiments, the measured operating points can be obtained in real time or in near real time as the sensors are performing measurements of operating parameters. In some embodiments, the measured operating points can be previously acquired operating points that have been stored, for instance, in one or more memory devices.

At (304), the method can include generating a first model specifying torque versus fuel flow characteristics for the first engine based on the measured operating points for the first engine. For instance, a baseline model associated with engine type of the first engine can be modified or adjusted based on the measured operating points for the first engine. In this way, the model can tuned to represent actual torque versus fuel flow characteristics for the first engine.

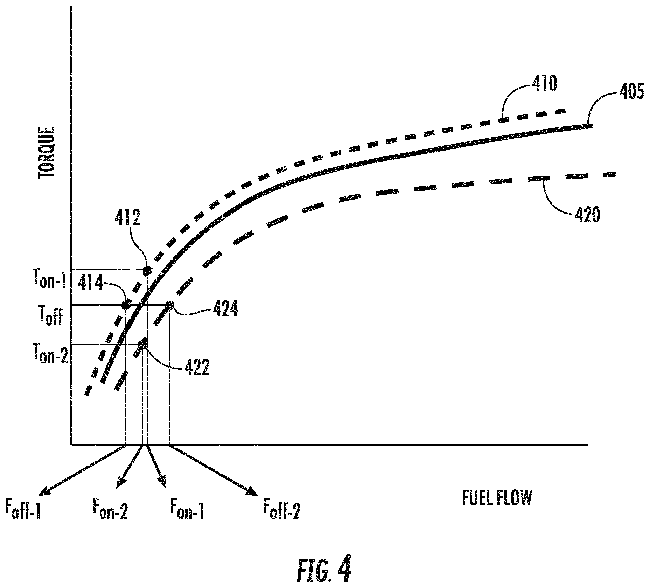

For example, FIG. 4 depicts a graphical representation of example models specifying torque versus fuel flow generated according to example embodiments of the present disclosure. Fuel flow is plotted along the horizontal axis. Torque is plotted along the vertical axis. Curve 405 represents a baseline model specifying torque versus fuel flow. Curve 410 represents a tuned model generated based on measured operating points of a first engine according to example embodiments of the present disclosure. As shown, curve 410 specifies a different torque versus fuel flow relationship for the first engine relative to the baseline model.

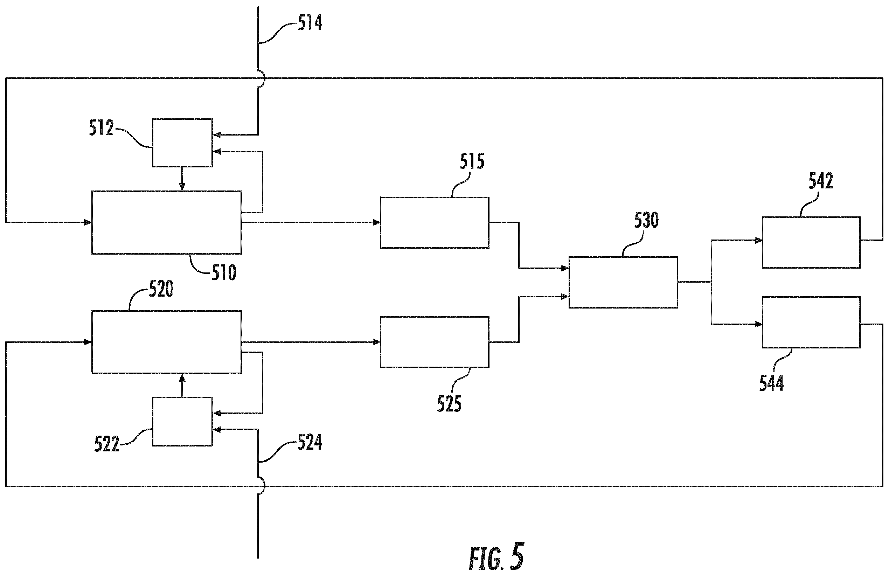

In one embodiment, the first model can be generated based on the measured operating points using, for instance, regression type algorithms and/or non-linear model matching techniques. For instance, various torque/fuel flow operating points measured for the first engine can be analyzed using regression algorithms to generate the first model for the first engine. In other embodiments, the first model specifying torque versus fuel flow characteristics for the first engine can be generated from a multi-parameter, non-linear physics-based engine model associated with the first engine as will be discussed in more detail below with reference to FIG. 5.

At (306) of FIG. 3, the method can include generating a second model specifying torque versus fuel flow characteristics for the second engine based on the measured operating points for the second engine. For instance, a baseline model associated with engine type of the second engine can be modified or adjusted based on the measured operating points for the second engine. In this way, the model can tuned to represent actual torque versus fuel flow characteristics for the second engine.

Referring to FIG. 4, curve 420 represents an example tuned model generated based on measured operating points of a second engine according to example embodiments of the present disclosure. As shown, curve 420 specifies a different torque versus fuel flow relationship for the second engine relative to the baseline model and relative to the first engine.

In one embodiment, the second model can be generated based on the measured operating points using, for instance, regression type algorithms and/or non-linear model matching techniques. For instance, various torque/fuel flow operating points measured for the second engine can be analyzed using regression algorithms to generate the second model for the second engine. In other embodiments, the second model specifying torque versus fuel flow characteristics for the second engine can be generated from a multi-parameter, non-linear physics-based engine model associated with the second engine as will be discussed in more detail below with reference to FIG. 5.

Referring to FIG. 3 at (308), the method can include determining a torque split for the first engine and the second engine using the first model specifying torque versus fuel flow for the first engine and the second model specifying torque versus fuel flow for the second engine. The torque split can include data indicative of an amount of torque to be provided by the first engine and an amount of torque to be provided by the second engine. The torque split can be specified in any suitable fashion, such as a ratio, percentage, etc.

In one embodiment, the torque split can be determined using an optimization that can find an optimal torque split between the first engine and the fuel flow that provides the minimum fuel flow. As used herein, the use of the term "optimum" or "optimal" refers to within 20% of and including an optimum or optimal solution. The use of the term "minimum" refers to within 20% of and including a minimum solution. The use of the term "maximum" refers to within 20% of and including a maximum solution. In some embodiments, the torque split is determined by identifying a torque split that provides a desired total torque output that results in a minimum total fuel flow for the system.

For example, in one embodiment, a torque split specifying a first torque T₁ to be provided by the first engine and a second torque T₂ to be provided by the second engine can be determined to minimize WF₁ + WF₂ subject to the constraint that T₁ + T₂ = T_{TOT}. T_{TOT} is the total desired output torque for the system. WF₁ is the fuel flow of the first engine when providing the first torque T₁. WF₂ is the fuel flow of the second engine when providing the second torque T₂.

Referring to FIG. 4, one example optimal torque split determined according to example aspects of the present disclosure can include T_{ON-1} for the first engine and T_{ON-2} for the second engine. Point 412 on the curve 410 corresponding to the first model indicates that fuel flow WF_{ON-1} corresponds to torque T_{ON-1}. Point 422 on the curve 420 corresponding to the second model indicates that fuel flow WF_{ON-2} corresponds to torque T_{ON-2}, resulting in a total fuel flow of WF_{ON-1} + WF_{ON-2}.

Operating the first engine and the second engine at an equal torque T_{OFF} results in fuel flow WF_{OFF-1} for the first engine from point 414 on curve 410 and WF_{OFF-2} for the second engine from point 424 on curve 420. T_{OFF} can be equal to T_{ON-1} + T_{ON-2}. As demonstrated, WF_{ON-1} +WF_{ON-2} is less than WF_{OFF-1} +WF_{OFF-2}. Accordingly, operating according to the torque split T_{ON-1} for the first engine and T_{ON-2} for the second engine results in total reduced fuel flow for the multi-engine system.

At (310), the method can include controlling the first engine and the second engine based at least in part on the torque split. For instance, command signals can be sent to or generated by the engine controller associated with each engine to control operation of the engine to provide a torque output specified by the determined torque split.

FIG. 5 depicts a control scheme associated with determining a torque split using complex multi-parameter non-linear engine models for a first engine and a second engine according to example embodiments of the present disclosure. A first engine model 510 can be used to estimate parameters for the first engine. The second engine model 520 can be used to estimate parameters for the second engine.

Each of the first engine model 510 and second engine model 520 can be complex multi-parameter models that are used to estimate sensed parameters associated with an engine, such as shaft torque, rotor speeds, temperatures, and pressures, as well as computed parameters such as thrust, airflows, stall margins, and turbine inlet temperature. The computed parameters are based on for example, but not limited to environmental conditions, power setting parameters, and second control parameters (e.g., variable geometry positions, variable bleed valve positions, etc.) input into engine model. In some embodiments, engine models 510 and 520 can be physics-based aerothermodynamics models.

As shown in FIG. 5, the first engine model 510 can exchange data with a first tracking filter 512. The first tracking filter 512 can receive signals 514 indicative of one or more measured operating parameters associated with the first engine and can be configured to compare differences between the measured operating parameters and operating parameters estimated by the first engine model 510. The first tracking filter 512 can be configured to adjust or tune parameters of the first engine model 510 to match the measured operating parameters with the operating parameter values that are determined by the first engine model 510. In this way, the tracking filter 512 can ensure that the first engine model 510 continuously accurately represents the first engine regardless of changes in component wear, component efficiency, and/or component failures.

Similarly, the second engine model 520 can exchange data with a second tracking filter 522. The second tracking filter 522 can receive signals 524 indicative of one or more measured operating parameters associated with the second engine and can be configured to compare differences between the measured operating parameters and operating parameters estimated by the second engine model 520. The second tracking filter 522 can be configured to adjust or tune parameters of the second engine model 520 to match the measured operating parameters with the operating parameter values that are determined by the second engine model 520. In this way, the tracking filter 522 can ensure that the second engine model 520 continuously accurately represents the first engine regardless of changes in component wear, component efficiency, and/or component failures.

The first engine model 510 can be used to generate a first model 515 specifying torque versus fuel flow for the first engine. For instance, the first engine model 510 can be evaluated based on various trim conditions and other operating points of the first engine to generate the first model 515 specifying torque versus fuel flow. Similarly, the second engine model 520 can be used to generate a second model 525 specifying torque versus fuel flow for the second engine. For instance, the second engine model 510 can be evaluated based on various trim conditions and other operating points of the second engine to generate the second model 525 specifying torque versus fuel flow.

As shown in FIG. 5, the first model 515 and the second model 525 can be provided to a torque split algorithm 530. The torque split algorithm 530 can determine a torque split for the first engine and the second engine that reduced fuel flow based at least in part on the first model 515 and the second model 525. For instance, the torque split algorithm 530 can determine a torque split between the first engine and the second engine based on the first model 515 and the second model 525 in the manner discussed with reference to FIG. 4.

According to example embodiments of the present disclosure, one or more performance seeking control processes can be performed independently for each of the first engine and the second engine to determine various secondary control parameters for operation of each individual engine. In some embodiments, a performance seeking control process can iteratively vary the operating point of one or more secondary control parameters, such as variable geometry position (e.g., inlet guide vane position, variable stator vane position, etc.) and variable bleed valve position, to determine an operating point for the first engine that reduces fuel flow or other cost parameter for operation of the engine. For instance, the performance seeking control process can adjust an operating point of an engine to determine if the adjusted operating point provides for improved fuel flow. If so, the performance seeking control can specify operation of the engine based on the adjusted operating point. This process can be performed in an iterative fashion until an optimum or near optimum operating point is determined for the engine.

As shown in FIG. 5, a first performance seeking control process 542 can be performed to determine optimal secondary control parameters for the first engine. The optimal secondary control parameters can include, for instance, inlet guide vane positions, variable stator vane positions, variable bleed valve positions, etc. The secondary control parameters determined by the performance seeking control process 542 can be provided to the first engine model 510. The first engine model 510 can then generate the first model 515 specifying torque versus fuel flow for the first engine based on the secondary control parameters.

Similarly, a second performance seeking control process 544 can be performed to determine optimal secondary control parameters for the second engine. The optimal secondary control parameters can include, for instance, inlet guide vane positions, variable stator vane positions, variable bleed valve positions, etc. The secondary control parameters determined by the second performance seeking control process 544 can be provided to the second engine model 520. The second engine model 520 can then generate the second model 525 specifying torque versus fuel flow for the first engine based on the secondary control parameters.

In some embodiments, a global performance seeking control process can be performed for the multi-engine system to determine a torque split between the first engine and the second engine. The torque split can be one of the optimization variables implemented by the global performance seeking control process. For instance, the global performance seeking control process can adjust the torque split as well as other variables, such as one or more secondary control parameters for the first engine and one or more secondary control parameters for the second engine, to determine a torque split that provides the required total torque for the system while at the same time reducing fuel flow.

Although specific features of various embodiments may be shown in some drawings and not in others, this is for convenience only. In accordance with the principles of the present disclosure, any feature of a drawing may be referenced and/or claimed in combination with any feature of any other drawing.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

Various aspects and embodiments of the present invention are defined by the following numbered clauses:
1. A method of determining a torque split for a multi-engine system having a first engine and a second engine coupled to at least one shaft, the method comprising:
   generating, by one or more control devices, a first model specifying torque versus fuel flow for a first engine based at least in part on measured operating points for the first engine;
   generating, by the one or more control devices, a second model specifying torque versus fuel flow for a second engine based at least in part on measured operating points for the second engine;
   determining, by the one or more control devices, a torque split for the first engine and the second engine that reduces total fuel flow for the first engine and the second engine based at least in part on the first model and the second model; and
   controlling, by the one or more control devices, the torque output of the first engine and the second engine based at least in part on the torque split.
2. The method of clause 1, wherein the torque split is determined using the first model and the second model to provide a total torque output for the first engine and the second engine.
3. The method of any preceding clause, the method of claim 1, wherein the first model is generated based at least in part from a first engine model and the second model is generated based at least in part from a second engine model, the first engine model and the second engine model each comprising a multi-parameter physics based engine model.
4. The method of any preceding clause, wherein generating, by the one or more control devices, the first model comprises:
   tuning, by the one or more control devices, the first engine model using a first tracking filter based at least in part on the one or more measured operating points for the first engine to generate a first tuned engine model; and
   generating, by the one or more computing devices, the first model specifying torque versus fuel flow based at least in part from the first tuned engine model.
5. The method of any preceding clause, wherein generating, by the one or more control devices, the second model comprises:
   tuning, by the one or more control devices, the second engine model using a second tracking filter based at least in part on the one or more measured operating points for the second engine to generate a second tuned engine model; and
   generating, by the one or more computing devices, the second model specifying torque versus fuel flow based at least in part from the second tuned engine model.
6. The method of any preceding clause, wherein generating, by the one or more control devices, the first model further comprises determining, by the one or more control devices, one or more secondary control operating parameters for the first engine, the first model being determined from first engine model based at least in part on the one or more secondary control operating parameters.
7. The method of any preceding clause, wherein generating, by the one or more control devices, the second model further comprises determining, by the one or more control devices, one or more secondary control operating parameters for the second engine, the second model being determined from the second engine model based at least in part on the one or more secondary control operating parameters.
8. The method of any preceding clause, wherein the one or more secondary control operating parameters for the first engine comprise one or more of a variable geometry position for the first engine or a variable bleed valve position for the first engine.
9. The method of any preceding clause, wherein the one or more secondary control operating parameters for the second engine comprise one or more of a variable geometry position for the second engine or a variable bleed valve position for the first engine.
10. The method of any preceding clause, wherein the one or more secondary control operating parameters for the first engine are determined using a first performance seeking control process.
11. The method of any preceding clause, wherein the one or more secondary control operating parameters for the second engine are determined using a second performance seeking control process.
12. The method of any preceding clause, wherein determining, by the one or more control devices, a torque split for the first engine and the second engine that reduces total fuel flow for the first engine and the second engine based at least in part on the first model and the second model comprises determining, by the one or more control devices, the torque split using a global performance seeking control process having the torque split as an optimization parameter.
13. The method of any preceding clause, wherein the global performance seeking control process is based at least in part on one or more secondary control parameters for the first engine and one or more secondary control parameters for the second engine.
14. A control system for an aircraft having multiple engines providing torque to a shaft, the control system comprising:
   one or more processors;
   one or more memory devices;
   one or more first sensors configured to obtain measurements of one or more operating parameters associated with a first engine; and
   one or more second sensors configured to obtain measurements of one or more operating parameters associated with a second engine;
   wherein the one or more memory devices store computer-readable instructions that when executed by the one or more processors cause the one or more processors to perform operations, the operations comprising:
      generating a first model specifying torque versus fuel flow for a first engine based at least in part on the measurements of one or more operating parameters obtained by the one or more first sensors;
      generating a second model specifying torque versus fuel flow for a second engine based at least in part on the measurements of one or more operating parameters obtained by the one or more second sensors;
      determining a torque split for the first engine and the second engine that reduces total fuel flow for the first engine and the second engine based at least in part on the first model and the second model; and
      controlling the torque output of the first engine and the second engine based at least in part on the torque split.
15. The control system of any preceding clause, wherein the first model is generated based at least in part from a first engine model and the second model is generated based at least in part from a second engine model, the first engine model and the second engine model each comprising a multi-parameter non-linear engine representation.
16. The control system of any preceding clause, wherein the operation of generating the first model comprises tuning the first engine model using a first tracking filter based at least in part on the measurements of one or more operating parameters obtained by the one or more first sensors to generate a first tuned engine model; and generating the first model specifying torque versus fuel flow from the first tuned engine model; and
   wherein the operation of generating the second model comprises tuning the second engine model using a second tracking filter based at least in part on the measurements of one or more operating parameters obtained by the one or more second sensors to generate a second tuned engine model; and generating the second model specifying torque versus fuel flow from the second tuned engine model.
17. The control system of any preceding clause, wherein the operation of generating the first model further comprises determining one or more secondary control operating parameters for the first engine using a first performance seeking control process, the first model being determined from first engine model based at least in part on the one or more secondary control operating parameters; and
   wherein the operation of generating the second model further comprises determining one or more secondary control operating parameters for the second engine, the second model being determined from the second engine model based at least in part on the one or more secondary control operating parameters.
18. The control system of any preceding clause, wherein the operation of determining a torque split for the first engine and the second engine that reduces total fuel flow for the first engine and the second engine based at least in part on the first model and the second model comprises determining the torque split using a global performance seeking control process having the torque split as an optimization parameter.
19. An aircraft, comprising:
   a first engine configured to provide a first torque to at least one shaft;
   a second engine configured to provide a second torque to the at least one shaft;
   a control system programmed to perform operations, the operations comprising:
      generating a first model specifying torque versus fuel flow for a first engine based at least in part on measured operating points for the first engine;
      generating a second model specifying torque versus fuel flow for a second engine based at least in part on measured operating points for the second engine;
      determining the first torque for the first engine and the second torque for the second engine that reduces total fuel flow for the first engine and the second engine based at least in part on the first model and the second model; and
      controlling the torque output of the first engine and the second engine based at least in part on the first torque and the second torque.
20. The aircraft of any preceding clause, wherein the first model and the second model are determined using regression or non-linear modeling.

## Claims

1. A method (300) of determining a torque split for a multi-engine system (100) having a first engine (110) and a second engine (120) coupled to at least one shaft (130), the method comprising:
generating (304), by one or more control devices (230), a first model (515) specifying torque versus fuel flow for a first engine (110) based at least in part on measured operating points for the first engine (110);
generating (306), by the one or more control devices (230), a second model (525) specifying torque versus fuel flow for a second engine (120) based at least in part on measured operating points for the second engine (120);
determining (308), by the one or more control devices (230), a torque split for the first engine (110) and the second engine (120) that reduces total fuel flow for the first engine (110) and the second engine (120) based at least in part on the first model (515) and the second model (525); and
controlling (310), by the one or more control devices (230), the torque output of the first engine (110) and the second engine (120) based at least in part on the torque split.

2. The method (300) of claim 1, wherein the torque split is determined using the first model (515) and the second model (525) to provide a total torque output for the first engine (110) and the second engine (120).

3. The method (300) of either of claim 1 or 2, wherein the first model (515) is generated based at least in part from a first engine model (510) and the second model (525) is generated based at least in part from a second engine model (520), the first engine model (510) and the second engine model (520) each comprising a multi-parameter physics based engine model.

4. The method (300) of claim 3, wherein generating, by the one or more control devices (230), the first model (515) comprises:
tuning, by the one or more control devices (230), the first engine model (510) using a first tracking filter based at least in part on the one or more measured operating points for the first engine (110) to generate a first tuned engine model; and
generating, by the one or more computing devices, the first model (515) specifying torque versus fuel flow based at least in part from the first tuned engine model.

5. The method (300) of claim 4, wherein generating, by the one or more control devices (230), the second model (525) comprises:
tuning, by the one or more control devices (230), the second engine model (520) using a second tracking filter based at least in part on the one or more measured operating points for the second engine (120) to generate a second tuned engine model; and
generating, by the one or more computing devices, the second model (525) specifying torque versus fuel flow based at least in part from the second tuned engine model.

6. The method (300) of claim 5, wherein generating, by the one or more control devices (230), the first model (515) further comprises determining, by the one or more control devices (230), one or more secondary control operating parameters for the first engine (110), the first model (515) being determined from first engine model (510) based at least in part on the one or more secondary control operating parameters.

7. The method (300) of claim 6, wherein generating, by the one or more control devices (230), the second model (525) further comprises determining, by the one or more control devices (230), one or more secondary control operating parameters for the second engine (120), the second model (525) being determined from the second engine model (520) based at least in part on the one or more secondary control operating parameters.

8. The method (300) of either of claim 6 or 7, wherein the one or more secondary control operating parameters for the first engine (110) comprise one or more of a variable geometry position for the first engine (110) or a variable bleed valve position for the first engine (110).

9. The method (300) of claim 7 or any claim dependent thereon, wherein the one or more secondary control operating parameters for the second engine (120) comprise one or more of a variable geometry position for the second engine (120) or a variable bleed valve position for the first engine (110).

10. The method (300) of claim 7 or any claim dependent thereon, wherein the one or more secondary control operating parameters for the first engine (110) are determined using a first performance seeking control process.

11. The method (300) of claim 10, wherein the one or more secondary control operating parameters for the second engine (120) are determined using a second performance seeking control process.

12. The method (300) of any preceding claim, wherein determining, by the one or more control devices (230), a torque split for the first engine (110) and the second engine (120) that reduces total fuel flow for the first engine (110) and the second engine (120) based at least in part on the first model (515) and the second model (525) comprises determining, by the one or more control devices (230), the torque split using a global performance seeking control process having the torque split as an optimization parameter.

13. The method (300) of claim 12, wherein the global performance seeking control process is based at least in part on one or more secondary control parameters for the first engine (110) and one or more secondary control parameters for the second engine (120).

14. A control system for an aircraft having multiple engines providing torque to a shaft (130), the control system comprising:
one or more processors (232);
one or more memory devices (234);
one or more first sensors configured to obtain measurements of one or more operating parameters associated with a first engine (110); and
one or more second sensors configured to obtain measurements of one or more operating parameters associated with a second engine (120);
wherein the one or more memory devices (234) store computer-readable instructions that when executed by the one or more processors (232) cause the one or more processors (232) to perform operations, the operations comprising:
generating a first model (515) specifying torque versus fuel flow for a first engine (110) based at least in part on the measurements of one or more operating parameters obtained by the one or more first sensors;
generating a second model (525) specifying torque versus fuel flow for a second engine (120) based at least in part on the measurements of one or more operating parameters obtained by the one or more second sensors;
determining a torque split for the first engine (110) and the second engine (120) that reduces total fuel flow for the first engine (110) and the second engine (120) based at least in part on the first model (515) and the second model (525); and
controlling the torque output of the first engine (110) and the second engine (120) based at least in part on the torque split.

15. The control system of claim 14, wherein the first model (515) is generated based at least in part from a first engine model (510) and the second model (525) is generated based at least in part from a second engine model (520), the first engine model (510) and the second engine model (520) each comprising a multi-parameter non-linear engine representation.
